Europäisches Patentamt

European Patent Office

Office européen des brevets

(19)

(11) Publication number: **0 117 951**
**B1**

(12) EUROPEAN PATENT SPECIFICATION

(45) Date of publication of patent specification: 04.10.89

(51) Int. Cl.⁴: **B 60 J 3/00**

(21) Application number: **83307572.4**

(22) Date of filing: **13.12.83**

(54) Visor cover assembly.

(30) Priority: **07.02.83 US 464476**

(43) Date of publication of application:
**12.09.84 Bulletin 84/37**

(45) Publication of the grant of the patent:
**04.10.89 Bulletin 89/40**

(84) Designated Contracting States:
**DE FR GB IT**

(56) References cited:
**US-A-4 000 404**
**US-A-4 075 468**
**US-A-4 213 169**
**US-A-4 227 242**

(73) Proprietor: **PRINCE CORPORATION**
**Windcrest Drive**
**Holland Michigan 49423 (US)**

(72) Inventor: **Fleming, Dennis Joseph**
**617 State Street**
**Holland Michigan 49423 (US)**

(74) Representative: **Robinson, Anthony John**
**Metcalf et al**
**Kilburn & Strode 30 John Street**
**London, WC1N 2DD (GB)**

Courier Press, Leamington Spa, England.

EP 0 117 951 B1

### Description

The present invention relates to a visor cover assembly and particularly to one which can be employed in connection with a covered visor mirror. In particular the invention relates to a pivot connection between a movable cover for a visor mirror and the visor body.

Covered visor mirrors are available as a popular vehicle accessory and provide an important reduction of potential hazards with respect to glass shattering in the event of an accident when a visor is in a lowered use position. Also, when the mirror is not being employed, the closed covers eliminate stray light reflection which can cause distraction to the vehicle operator. Several visor cover pivot constructions have been described for example in US—A—4,000,404 and 4,213,169, the former of which discloses the features set out in the pre-characterising of Claim 1. In each of these cover assemblies, bias means are provided to ensure the cover will be held open when it is desired to uncover the mirror and held in a snap-closed position to securely hold the cover in the closed position.

In the construction described in US—A—4,000,404 a separate steel elbow serves as the pivot axle and also the attachment for the cover spring. The steel elbow is fitted into the plastic cover and with use, the plastic can creep causing the elbows to loosen rendering the cover spring inoperative. Also, with abusive use, the plastic surrounding the elbows can crack with the same undesired results. Finally, it will be evident that it is expensive to manufacture the two metal stampings forming the elbows, and costly to install them on the cover.

It is an object of the present invention at least to alleviate the difficulties associated with this structure. In particular, it is an object to provide a robust, inexpensive pivot connection. It is a further object to improve the manner in which the visor body of US—A—4,000,404 is mounted to the pivot axis.

According to the present invention a pivot connection between a movable cover for a visor mirror and the visor body as defined in the precharacterising portion of claim 1 is characterised in that the overcentre bias means is secured at one end thereof to a mounting boss integrally formed on the cover, and in that the pivot socket means includes a gap to permit the cover to be snap-inserted into the body. The bias means may hold the cover in the fully closed or fully open positions.

In a preferred embodiment the pivot socket means and the pivot axle means are generally cylindrical, the pivot socket means comprising resilient arcuate legs extending from the cover or body and terminating in spaced apart facing surfaces and the pivot axle means being truncated at opposite sides to define flattened sides spaced apart a distance greater than the spacing of the facing surfaces of the pivot socket means. Preferably the visor body comprises a mirror frame and one of the pivot socket means or pivot axle means is formed on the frame and the bias means extends between the cover and the frame.

Conveniently the frame may be generally rectangular and integrally include upper and lower struts joined at opposite ends to side legs and in which each of the side legs includes means spaced from the top leg for holding one end of the bias means. A suitable bias means comprises an elongated tension spring having one end coupled to the holding means. The bias means is suitably an over-centre spring.

Preferably the cover is pivotally mounted to the frame near the junction of each of the side legs to the upper leg and the cover includes an extending end extending beyond the pivot connection toward the top leg and in which the bias means has an end opposite the one end which is coupled to the extending end of the cover. The cover preferably comprises a means at each edge of the extending end for receiving and holding the opposite end of said spring. In a preferred embodiment the pivot axles are integrally formed on the frame and the pivot sockets are integrally formed on the cover.

The cover may conveniently comprise a pair of spaced wall means defining a recess therebetween, a first electrical contact having one end press-fitted into the recess for holding the contact to the cover, the first contact comprising means for supplying electrical power thereto and a contact end opposite the one end and extending outwardly from the recess, a second electrical contact mounted to the visor assembly to be engaged by the first contact when the cover is moved from a closed position; and illumination means coupled to the second contact to receive operating power therefrom when the cover is moved from the closed position. One end of the first contact is conveniently V-shaped with its widest portion having a dimension greater than the spacing between the wall means to compress the one end when inserted within the recess. The contact end of the first contact is preferably a rounded extension of one leg of the V-shaped end and the other leg of the V-shaped end engages one of the wall means defining the recess to anchor the first contact to the cover. Suitably the means for supplying electrical power to the first contact comprises a staking terminal integrally formed on the first contact between the first and second contact ends thereof.

The invention may be put into practice in various ways but one vehicle visor embodying the invention will now be described by way of example with reference to the accompanying drawings, in which:

Figure 1 is a perspective view of a vehicle visor;

Figure 2 is an enlarged, perspective view of a portion of the visor of Figure 1 shown with the cover in an open position;

Figure 3 is similar to Figure 2 but with the cover in a closed position;

Figure 4 is a further enlarged, fragmentary, cross-sectional view of one of the cover pivot mechanisms of the visor shown in Figures 1, 2 and 3 in an unassembled position;

Figure 5 is similar to Figure 4 and shows one of the cover pivot mechanisms shown in an assembled position.

Figure 6 is a fragmentary plan view of an electrical contact structure for use with the visor shown in Figures 1 to 5;

Figure 7 is a cross-sectional view of the electrical contact structure shown in Figure 6 taken along the section line VII—VII; and

Figure 8 is an electrical circuit diagram in schematic form of a lamp circuit for use with the visor shown in Figures 1 to 7.

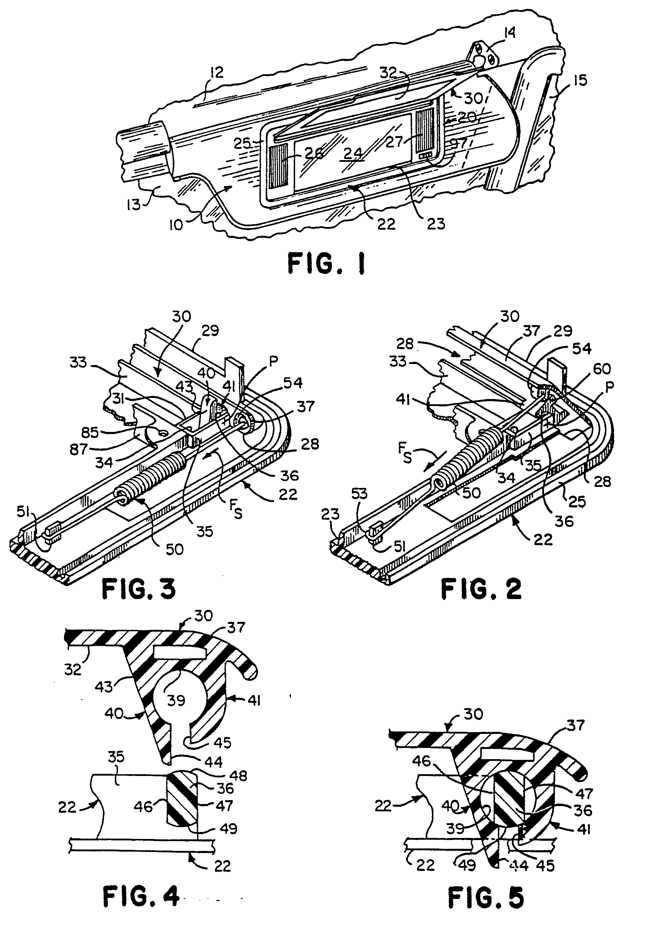

Referring initially to Figure 1, there is shown a covered visor 10 mounted on the right side of a vehicle. The visor comprises a visor body made of a core member injection moulded of a suitable polymeric material such as polypropylene and including a central rectangular recess for receiving therein a visor mirror assembly 20. Typically, the visor will be covered by a suitable upholstery material textured to conform to the upholstery of the vehicle interior and may be trimmed along the peripheral edge by an edge bead. The visor includes a pivot arm extending along its top edge permitting the visor body to pivot between a stored position against the headliner 12 of the vehicle or to a lowered use position, as illustrated in Figure 1, partially obstructing the upper edge of the windshield 13 of the vehicle. The pivot rod extends outwardly from the right end, as seen in Figure 1, terminating in a pivot mounting bracket 14 which permits the visor to pivot between the stored and use positions shown and also to move to the side window 15 of the vehicle for blocking incoming light from the side. The visor body and pivot rod can be constructed in any suitable manner such as is described in US—A—4,000,404 or US—A—4,075,468.

The visor mirror assembly 20 comprises a generally rectangular mirror frame 22 having integral top, bottom and side walls defining a central rectangular opening 23 into which there is mounted a mirror 24. The walls defining the frame 22 also define a peripheral trim flange 25 surrounding and extending over the edge of the recess in the visor body when the assembly 20 is mounted, as shown in Figure.

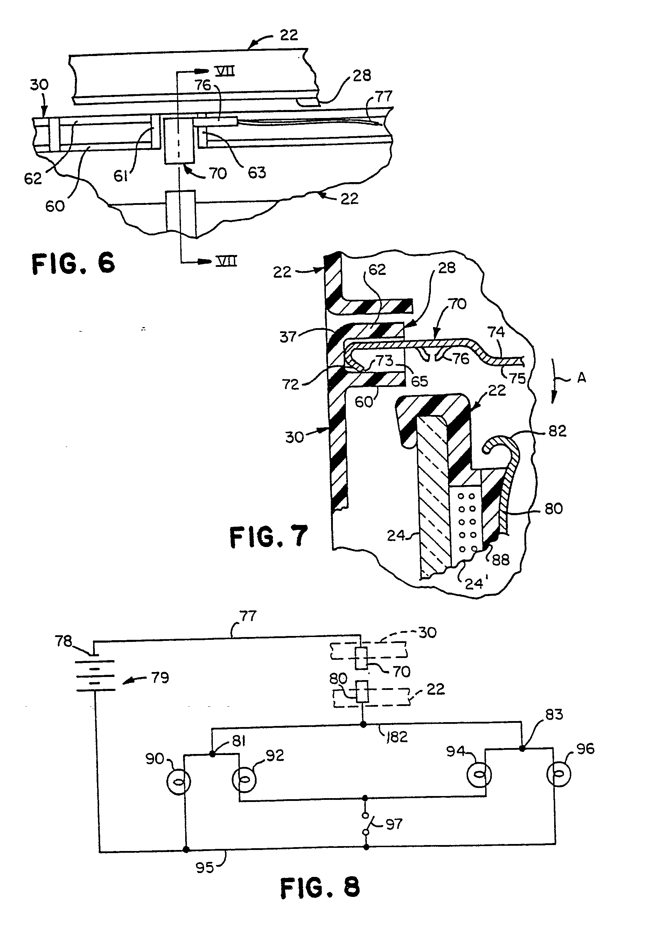

On opposite sides of the mirror 24, there is a pair of light means including lenses 26 and 27 behind which there is mounted lamps 90, 92, 94 and 96 (Figure 8) which receive electrical operating power from the vehicle's battery through switch means 70 and 80 operable upon opening of a cover 30 having a planar body 32. The cover pivots between an open position, shown in Figure 1, to permit an individual to use the mirror 24 and a closed position substantially covering the mirror and lenses 26 and 27. The cover 30 is thus pivotally mounted to the visor and preferably to the mirror frame 22 near the top thereof, as described in greater detail with reference to Figures 2 to 4. The cover is pivotally mounted to the frame at opposite ends with a similar structure symmetrical to that shown and described in connection with Figures 2 to 4.

Figures 2 and 3 show the rear of the mirror frame and cover assembly, and particularly, the corner shown in the upper left of Figure 1. The frame 22 includes a generally rectangular elongated recess or slot 28 which extends from the one side of the frame to the other and below the top wall of the frame and below a reinforcing integrally moulded strut 29 extending rearwardly along one edge of the opening 28. A lower reinforcing strut 33 also extends rearwardly from the face of the frame 22 at the lower edge of the opening 28 and terminates in an integral rectangular frame including sidewalls 31 and 35 and an end wall 34 and a pivot axle 36 which extends between the sidewalls 31 and 35 at an end opposite the wall 34 and lies parallel to and immediately adjacent the slot 28. The opposite end of the reinforcing strut 33 also terminates in a similar symmetrical configuration. The upper edge of the cover 30 includes a curved end 37 defining a first wall which extends into the slot 28 when the cover is opened and which integrally includes a circular socket 39 (Figures 4 and 5) formed therein by a pair of resilient arcuate legs 40 and 41. The leg 40 includes an inclined edge 43 facilitating assembly of the cover to the frame, as described in detail below, and includes a generally semicircular inner-wall integrally formed with a similar semicircular wall of leg 41 to form the generally circular, cross section, cylindrical socket 39, as best seen in Figures 4 and 5. The ends 44 and 45 of legs 40 and 41, respectively, terminate in spaced relationship to one another with parallel facing surfaces defining a gap with a width slightly less than the thickness of the pivot axle 36.

The pivot axle 36 is generally circular but truncated by a pair of flat opposite surfaces 46 and 47 between rounded ends 48 and 49 having a radius of curvature substantially the same as the circular socket 39. The legs 40 and 41 of the cover 30 extend inwardly from the planar body 32 of the cover a distance sufficient to allow the cover to be snapfitted into position with the sockets 39 on opposite edges fitting between the walls 31 and 35 in alignment over the pivot axles 36 and the cover 30 substantially aligned over the mirror 24 and the lenses 26 and 27. The cover is assembled by snap-fitting, as illustrated in Figures 4 and 5, when in a position aligned with its closed position with the legs 40 and 41 deflecting outwardly sufficiently for the pivot axle 36 at each end of the frame to fit within the corresponding socket. The gap between the edges 44 and 45 of the legs 40 and 41, respectively, as illustrated in Figure 5, is such that once inserted the cover will pivot with the surfaces 48 and 49 of the pivot axis riding smoothly and in a continuous fashion in the circular socket 39. The length of each of the pivot axles 36 is slightly greater than the width of the legs 40 and 41 which in turn are narrower than the spacing between the walls 31 and 35 to permit the legs to extend between the side-walls 31 and 35 of the support to permit free pivoting motion between the cover and the frame. A suitable lubricant may be added to this pivot connection during assembly of the cover to the frame. The frame and cover are integrally moulded of a suitable polymeric material such as poly-carbonate.

In order to urge the cover between a held open position, as illustrated in Figures 1 and 2, and a held closed position, as shown in Figure 3, an overcentre spring is employed at each end of the cover. Each of the springs 50 is coupled to a mounting post 51 extending inwardly from the back of one of the sidewalls of the frame 22 by a U-shaped end 53 of the springs 50 which surrounds the post 51 and securely anchors this end of the spring to the post. The opposite end of the spring 50 includes a leg extending into an aperture of a mounting boss 54 integrally formed on the curved extending end 37 of the cover 30 just laterally outside the sidewall 35 supporting the pivot axle 36. The coil spring 50 is installed in tension to impart a spring force $F_s$, as illustrated in Figures 2 and 3, to provide a cover opening force on one side of the pivot axis P of the cover, as shown in Figure 2, for holding the cover in an open position for use, as illustrated in Figure 1, and on the opposite side of the pivot axis P of the cover, as shown in Figure 3, for holding the cover in a closed position. The electrical contact cooperating between the cover and frame for providing operating power to the light means is now described in conjunction with Figures 6 to 8.

The curved extending edge 37 of the cover 30 defines one of a pair of spaced walls 60 and 62, as seen in Figure 6, extending substantially along the top, inside edge of the cover 30 and between the sockets 39. Positioned at a location spaced inwardly from one end of the cover is a pair of integrally moulded lands 61 and 63 extending between the walls 60 and 62 to define therebetween a rectangular recess 65 which receives and holds a switch means or first electrical contact 70. The contact 70 may be made of beryllium copper and has a generally rectangular configuration with one end 72 being formed in a V-shape and forcefitted between the walls 60 and 62, as illustrated in Figure 7, for securely mounting the contact therein. The open end of the V-shape has a greater width than the spacing between the walls 60 and 62 such that the end 72 is compressed when inserted within the recess 65. The end 72 has a tip 73 which engages the wall 60 and effectively anchors the end 72 of the contact within the recess 65 against removal. The opposite end 74 of the contact 70 is generally rounded and curved in a shallow S-shape configuration with a rounded contacting surface 75 facing downwardly, as seen in Figure 7. Approximately midway between the ends 72 and 74, there is provided a wire crimp or staking terminal 76 to which there is attached an electrical conductor 77 which is coupled to the positive terminal 78 of the vehicle's battery 79 typically through a suitable inner-connecting terminal located at the instrument panel of the vehicle. The conductor 77 is trained along the channel defined by the walls 60 and 62 and through the body of the visor 10 and the pivot mounting bracket 14 in a suitable known manner.

The movable contact 70 is positioned in vertical alignment with a stationary contact 80 mounted to a polymeric chassis 88 secured to the reverse side of the frame 22. A foam pad 24′ may be placed behind the mirror 24 and between the mirror and the polymeric chassis 88 to which contact 80 is secured. The contact 80 includes a curved end 82 which is engaged by the contact surface 75 of the contact 70. When the cover 30 is opened, the contact 70 pivots downwardly in the direction indicated by arrow A, in Figure 7, to physically and electrically couple the contacts 70 and 80. The contact surface 75 thereby wipes the outer surface of the rounded edge 82 of the contact 80 which is coupled to a supply conductor 182 (Figure 8) for supplying operating current to electrically common terminals 81 and 83 of the lamps 90, 92, 94 and 96. The lamps 90 and 92 are positioned to be located behind the lens 26 (Figure 1) while the lamps 94 and 96 are positioned behind the lens 27. The lamps 90 and 96 are coupled directly to the system's common ground conductor 95 while the lamps 92 and 94 are coupled to this conductor through a bright-dim single pole, single throw switch 97, also seen in Figure 1. As can be seen in Figure 8, when the cover 30 is open, the contact 70 engages the contact 80 supplying electrical power immediately to the lamps 90 and 96 causing their illumination and if the switch 97 is in a bright position, also simultaneously illuminating the lamps 92 and 94 to provide a higher level illumination as desired by the user. The contact 70 is readily fitted within the recess 65 formed in the top edge of the cover 30 and provides a relatively inexpensive movable contact easily assembled and which provides a stable and secure fastening of this contact to the cover.

Preferably the gap between the facing surfaces 44 and 45 was about 3.175 mm (0.125 ins) while the thickness of the pivot axle 36 between the sides 46 and 47 was about 3.572 mm (0.1406 ins). The width of legs 40 and 41 was about 4.763 mm (0.1875 ins) while axle 36 was about 6.350 mm (0.25 ins). The frame 22 is secured to the body of the visor by fastening screws extending through apertures 85 (Figure 3) at the outer corners of a lens holding recesses 87 of the frame.

**Claims**

1. A pivot connection between a movable cover (30) for a visor mirror (24) and the visor body (10), comprising pivot socket means (40, 41) located on one of the cover or the body; pivot axle means (36) located on the other of the cover of the body aligned with the pivot socket means and surrounded thereby, the pivot socket means and pivot axle means being shaped to cooperate with one another, and overcentre bias means (50) operatively coupled between the cover and the body for selectively urging the cover towards an open or towards a closed position; characterised in that the overcentre bias means (50) is secured at one end thereof to a mounting boss (54) integrally formed on the cover, and in that the pivot socket means includes a gap to permit the cover to be snap-inserted into the body.

2. A pivot connection as claimed in Claim 1 in which the pivot socket means and the pivot axle means are generally cylindrical, the pivot socket means comprising resilient arcuate legs (40, 41) extending from the cover or body and terminating in spaced apart facing surfaces (44, 45) and the pivot axle means being truncated at opposite sides to define flattened sides (46, 47) spaced apart a distance greater than the spacing of the facing surfaces of the pivot socket means.

3. A pivot connection as claimed in Claim 1 or Claim 2 in which the visor body comprises a mirror frame (22) and one of the pivot socket means or pivot axle means is formed on the frame and the bias means extends between the cover and the frame.

4. A pivot connection as claimed in Claim 3 in which the frame is generally rectangular and integrally includes upper (29) and lower (33) struts (29, 33) joined at opposite ends to side legs (31, 35) and in which each of the side legs includes means (51) spaced from the upper strut for holding one end of the bias means.

5. A pivot connection as claimed in Claim 4 in which the bias means comprises an elongated tension spring (50) having one end coupled to the means (51) for holding one end of the bias means.

6. A pivot connection as claimed in Claim 4 or 5 in which the cover is pivotally mounted to the frame (22) near the junction of each of the side legs (31, 35) to the upper leg (29) and the cover includes an extending end (37) extending beyond the pivot connection toward the top leg and in which the bias means has an end opposite the one end which is coupled to the extending end of the cover.

7. A pivot connection as claimed in Claim 6 in which the cover comprises a means (54) at each edge of the extending end (37) for receiving and holding the opposite end of said spring.

8. A pivot connection as claimed in any one of the preceding claims in which the cover comprises a pair of spaced wall means (60, 62) defining a recess (65) therebetween, a first electrical contact (70) having one end (72) press-fitted into the recess for holding the contact to the cover, the first contact comprising means for supplying electrical power thereto and a contact end (74) opposite the one end and extending outwardly from the recess, a second electrical contact (80) mounted to the visor assembly to be engaged by the first contact when the cover is moved from a closed position; and illumination means (90, 92, 94, 96) coupled to the second contact (80) to receive operating power therefrom when the cover is moved from the closed position.

9. A pivot connection as claimed in Claim 8 in which one end (72) of the first contact is V-shaped with its widest portion having a dimension greater than the spacing between the wall means to compress the one end when inserted within the recess.

10. A pivot connection as claimed in Claim 9 in which the contact end (74) of the first contact is a rounded extension (75) of one leg of the V-shaped end and the other leg of the V-shaped end engages (73) one of the wall means defining the recess to anchor the first contact to the cover.

11. A pivot connection as claimed in any one of Claims 8, 9 or 10 in which the means for supplying electrical power to the first contact (70) comprises a staking terminal (76) integrally formed on the first contact between the first and contact ends thereof.

**Patentansprüche**

1. Schwenkverbindung zwischen einer beweglichen Abdeckung (30) für einen Sonnenblendenspiegel (24) und dem Sonnenblendenkörper (10) mit einem entweder auf der Abdeckung oder auf dem Körper vorgesehenen Schwenksockel (40, 41); einer auf dem anderen Teil, dem Körper oder der Abdeckung, vorgesehenen Schwenkachse (36), die mit dem Schwenksockel fluchtet und von diesem umgeben ist, wobei der Schwenksockel und die Schwenkachse so geformt sind, daß sie miteinander zusammenwirken, und einer funktionswirksam zwischen die Abdeckung und den Körper gekoppelten Sprungwerkvorspanneinrichtung (50), um wahlweise die Abdeckung in eine offene oder in eine geschlossene Stellung zu zwingen; dadurch gekennzeichnet, daß die Sprungwerkvorspanneinrichtung (50) an einem ihrer Enden an einem integral an die Abdeckung angeformten Befestigungsvorsprung (54) befestigt ist, und daß der Schwenksockel einen Zwischenraum aufweist, durch den die Abdeckung durch Einschnappen in den Körper einsetzbar ist.

2. Schwenkverbindung nach Anspruch 1, wobei der Schwenksockel und die Schwenkachse im wesentlichen zylindrisch sind; der Schwenksockel federnde bogenförmige Schenkel (40, 41) enthält, die von der Abdeckung oder dem Körper ausgehen und ihn voneinander beabstandeten, einander zugewandten Oberflächen (44, 45) enden, und die Schwenkachse auf gegenüberliegenden Seiten abgestumpft ist, um abgeflachte Seiten (46, 47) zu definieren, die voneinander einen Abstand aufweisen, der größer ist als der Abstand der einander zugewandten Oberflächen des Schwenksockels.

3. Schwenkverbindung nach Anspruch 1 oder 2, wobei der Sonnenblendenkörper einen Spiegelrahmen (22) enthält und der Schwenksockel oder die Schwenkachse an den Rahmen angeformt ist und die Vorspannungseinrichtung zwischen der Abdeckung und dem Rahmen verläuft.

4. Schwenkverbindung nach Anspruch 3, wobei der Rahmen im wesentlichen rechteckig ist und einstückig obere (29) und untere (33) Streben (29, 33) enthält, die an gegenüberliegenden Enden mit Seitenschenkeln (31, 35) verbunden sind und wobei jeder der Seitenschenkel eine von der oberen Strebe beabstandete Einrichtung (51) enthält, um ein Ende der Vorspannungseinrichtung zu halten.

5. Schwenkverbindung nach Anspruch 4, wobei die Vorspannungseinrichtung eine längs ausgedehnte Zugfeder (50) enthält, die mit einem Ende an die Einrichtung (51) zum Halten des einen Endes der Vorspannungseinrichtung gekoppelt ist.

6. Schwenkverbindung nach Anspruch 4 oder 5, wobei die Abdeckung schwenkbar an dem Rahmen (22) angebracht ist, in der Nähe der Verbindung jedes der Seitenschenkel (31, 35) mit dem oberen Schenkel (29) und wobei die Abdeckung ein sich erstreckendes Ende (37) enthält, das sich über die Schwenkverbindung hinaus zu dem oberen Schenkel erstreckt und wobei die Vorspannungseinrichtung ein dem einen Ende gegenüberliegendes Ende aufweist, das an das sich erstreckende Ende der Abdeckung gekoppelt ist.

7. Schwenkverbindung nach Anspruch 6, wobei die Abdeckung eine Einrichtung (54) an jeder Kante des sich erstreckenden Endes (37) enthält, um das gegenüberliegende Ende der Feder aufzunehmen und zu halten.

8. Schwenkverbindung nach einem der vorhergehenden Ansprüche, wobei die Abdeckung ein Paar von beabstandeten Wänden (60, 62) enthält, die eine Vertiefung (65) dazwischen begrenzen, einen ersten elektrischen Kontakt (70), der mit einem Ende (72) in die Vertiefung eingepreßpaßt ist, um den Kontakt an der Abdeckung zu halten, der erste Kontakt eine Einrichtung zur Zuführung von elektrischer Leistung zu dieser enthält und ein Kontaktende (74), das dem einen Ende gegenüberliegt und sich von der Vertiefung nach außen erstreckt, einen an der Sonnenblendenbaugruppe angebrachten zweiten elektrischen Kontakt (80), der von dem ersten Kontakt bei Bewegung der Abdeckung aus einer geschlossenen Stellung kontaktiert wird; und eine an den zweiten Kontakt (80) gekoppelte Beleuchtungseinrichtung (90, 92, 94, 96), welche von dort bei Bewegung der Abdeckung aus der geschlossenen Stellung mit Betriebsleistung versorgt wird.

9. Schwenkverbindung nach Anspruch 8, wobei ein Ende (72) des ersten Kontakts V-förmig ist, wobei dessen breitester Teil eine Abmessung hat, die größer ist als der Abstand zwischen den Wänden, um das eine Ende beim Einsetzen in die Vertiefung zusammenzudrücken.

10. Schwenkverbindung nach Anspruch 9, wobei das Kontaktende (74) des ersten Kontakts eine abgerundete Verlängerung (75) des einen Schenkels des V-förmigen Endes ist und der andere Schenkel des V-förmigen Endes (73) an eine die Vertiefung begrenzende Wand angreift, um den ersten Kontakt an der Abdeckung zu verankern.

11. Schwenkverbindung nach einem der Ansprüche 8, 9 oder 10, wobei die Einrichtung zum Zuführen der elektrischen Leistung zu dem ersten Kontakt (70) einen Steck- oder Nietanschluß (76) enthält, der an den ersten Kontakt zwischen dessen erstem und Kontaktende einstückig angeformt ist.

**Revendications**

1. Une liaison pivotante entre une chape mobile (30) pour un miroir (24) de pare-soleil et le corps (10) du pare-soleil, comprenant des moyens (40, 41) formant douille de pivot qui sont placés sur une des parties constituées par la chape ou le corps; un moyen (36) formant pivot placé sur l'autre des parties constituées par la chape ou le corps et alignées avec le moyen formant douille de pivot en étant entourées par ce dernier, le moyen formant douille et le moyen formant pivot étant profilés pour coopérer l'un avec l'autre, ainsi qu'un moyen (50) de rappel avec dépassement de point mort qui est accouplé fonctionnellement entre la chape et le corps pour rappeler sélectivement la chape vers une position d'ouverture ou vers une position de fermeture; caractérisée en ce que le moyen (50) de rappel avec dépassement de point mort est fixé par une extrémité sur un bossage de montage (54) formé unitairement sur la chape, et en ce que le moyen formant douille de pivot comporte un intervalle permettant à la chape d'être insérée par emboîtement dans le corps.

2. Une liaison pivotante telle que revendiquée dans la revendication 1, dans laquelle le moyen formant douille de pivot et le moyen formant pivot sont cylindriques dans l'ensemble, le moyen formant douille de pivot comprenant des pattes élastiques incurvées (40, 41) s'étendant à partir de la chape ou du corps et se terminant dans des surfaces (44, 45) dirigées l'une vers l'autre et espacées l'une de l'autre, et le moyen formant pivot étant tronqué sur des côtés opposés de façon à définir des côtés aplatis (46, 47) espacés l'un de l'autre d'une distance supérieure à l'espacement des surfaces précitées du moyen formant douille de pivot.

3. Une liaison pivotante telle que revendiquée dans la revendication 1 ou la revendication 2, dans laquelle le corps de pare-soleil comprend un châssis de miroir (22), et l'un des moyens constitués par le moyen formant douille de pivot ou le moyen formant pivot est formé sur le châssis, tandis que le moyen de rappel s'étend entre la chape et le châssis.

4. Une liaison pivotante telle que revendiquée dans la revendication 3, dans laquelle le châssis est rectangulaire dans l'ensemble, et comprend unitairement des membrures (29, 33) supérieure (29) et inférieure (33) jointes par leurs extrémités opposées avec des pattes latérales (31, 35), et dans laquelle chacune des pattes latérales comprend un moyen (51) espacé de la membrure supérieure pour maintenir une extrémité du moyen de rappel.

5. Une liaison pivotante telle que revendiquée dans la revendication 4, dans laquelle le moyen de rappel comprend un ressort allongé de tension (50) comportant une extrémité reliée au moyen (51) servant à maintenir une extrémité dudit moyen de rappel.

6. Une liaison pivotante telle que revendiquée dans la revendication 4 ou 5, dans laquelle la chape est montée de façon pivotante sur le châssis (22) à proximité de la jonction de chacune des pattes latérales (31, 35) avec la membrure supérieure (29), et la chape comporte une extrémité de prolongement (37) s'étendant au delà de la liaison pivotante en direction de la patte supérieure, et dans laquelle le moyen de rappel comporte une extrémité opposée à l'extrémité qui est reliée à l'extrémité de prolongement de la chape.

7. Une liaison pivotante telle que revendiquée dans la revendication 6, dans laquelle la chape comprend sur chaque bord de l'extrémité de prolongement (37) un moyen (54) pour recevoir et maintenir l'extrémité opposée dudit ressort.

8. Une liaison pivotante telle que revendiquée dans une quelconque des revendications précédentes, dans laquelle la chape comprend une paire de parois espacées (60, 62) définissant entre elles un évidement (65), un premier contact électrique (70) dont une extrémité (72) est emmanchée dans l'évidement pour maintenir le contact avec la chape, le premier contact comprenant un moyen pour assurer son alimentation en courant électrique et une extrémité de contact (74) opposée à la première extrémité et s'étendant à l'extérieur de l'évidement, un second contact électrique (80) monté sur l'ensemble de pare-soleil pour être contacté par le premier contact quand la chape est déplacée à partir d'une position de fermeture; et des moyens d'éclairement (90, 92, 94, 96) reliés au second contact (80) pour recevoir de celui-ci un courant d'excitation quand la chape est déplacée à partir de la position de fermeture.

9. Une liaison pivotante telle que revendiquée dans la revendication 8, dans laquelle une extrémité (72) du premier contact est en forme de V, dont la partie la plus large présente une dimension supérieure à l'espacement entre les parois précitées pour comprimer ladite extrémité quand elle est insérée dans l'évidement.

10. Une liaison pivotante telle que revendiquée dans la revendication 9, dans laquelle l'extrémité de contact (74) du premier contact est un prolongement arrondi (75) d'une branche de l'extrémité en forme de V, tandis que l'autre branche de l'extrémité en forme de V s'applique (73) contre une des parois définissant l'évidement afin de fixer le premier contact sur la chape.

11. Une liaison pivotante telle que revendiquée dans une quelconque des revendications 8, 9 ou 10, dans laquelle le moyen d'alimentation en courant électrique du premier contact (70) comprend une borne à picots (76) formée unitairement sur le premier contact entre ses extrémités.

FIG. 1

FIG. 3

FIG. 2

FIG. 4

FIG. 5

FIG. 6

FIG. 7

FIG. 8